# FASCICULE DE BREVET EUROPEEN

(11) **EP 2 889 193 B1**
(45) Date de publication et mention de la délivrance du brevet: **08.01.2020**
(21) Numéro de dépôt: 14196383.5
(22) Date de dépôt: 04.12.2014
(51) Int. Cl.: B60S 1/38

(54) **Dispositif de connexion électrique pour balai d'essuyage de système d'essuyage de véhicule automobile**
Elektrische Anschlussvorrichtung für Scheibenwischerblatt eines Scheibenwischsystems eines Kraftfahrzeugs
Electrical connection device for a wiper blade of a wiping system of a motor vehicle

(30) Priorité: 20.12.2013 FR 1363274
(43) Date de publication de la demande: 01.07.2015
(73) Titulaire: Valeo Systèmes d'Essuyage, 78322 Le Mesnil Saint Denis (FR)
(72) Inventeur: Jarasson, Jean-Michel, 78321 LE MESNIL SAINT DENIS (FR); Carraro, Philippe, 63450 St-Amant-Tallende (FR); Izabel, Vincent, 91380 CHILLY MAZARIN (FR); Caillot, Gérald, 78720 CERNAY LA VILLE (FR)
(74) Mandataire: Callu-Danseux, Violaine

(56) Documents cités:
- WO-A1-2010/034447
- WO-A1-2012/000868
- WO-A1-2012/072299
- DE-A1-102010 007 557
- DE-A1-102012 100 879

## Description

La présente invention concerne un dispositif de connexion électrique pour un dispositif de chauffage de balai d'essuyage de système d'essuyage de véhicule automobile, le balai d'essuyage et le système d'essuyage ainsi équipés.

Les automobiles sont couramment équipées d'installation d'essuyage et de système de lavage pour assurer un essuyage et un lavage du pare-brise et éviter que la vision qu'a le conducteur de son environnement ne soit perturbée. Les installations d'essuyage comprennent des bras effectuant un mouvement de va-et-vient angulaire, au bout desquels sont installés des balais allongés, porteurs eux-mêmes de lames racleuses réalisées en une matière élastique. Les lames frottent contre le pare-brise et évacuent l'eau en l'amenant en dehors du champ de vision du conducteur.

Les systèmes de lavage comprennent un dispositif d'amenée d'un liquide lave-glace qui est acheminé depuis un réservoir situé sur le véhicule et qui est projeté en direction du pare-brise par des gicleurs situés généralement sur le capot, sur la grille de baie de pare-brise ou, dans une version plus récente, sur le balai des essuie-glaces, ceci en particulier pour les balais de type plat ou « flat blade » en anglais, c'est-à-dire, pour les balais présentant par eux-mêmes un cintrage leur permettant d'être montés sur les bras sans l'intermédiaire d'étriers ou de palonniers.

Dans le cas de gicleurs placés sur les balais ou directement intégrés dans la structure du balai, le liquide lave-glace est acheminé par des canalisations qui sont fixées sur le bras des essuie-glaces et qui sont raccordées à un système de distribution du balai au niveau d'un connecteur permettant d'établir une liaison articulée entre le bras et le balai. Le connecteur comporte ainsi des orifices aptes à recevoir, par une liaison étanche, un élément de raccordement des canalisations sur le connecteur.

Lorsque la température du liquide lave-glace est trop basse, par exemple en-dessous de 5°C, on chauffe le liquide lave-glace à l'aide d'un dispositif de chauffage, notamment prévu le long du balai.

On connait un dispositif de connexion électrique pour dispositif de chauffage du liquide lave glace du balai, ce dispositif de connexion comprenant un connecteur électrique fixé dans un connecteur mécanique du balai, ledit connecteur mécanique servant à monter le balai sur son bras d'entrainement. Un tel dispositif de connexion est destiné à être relié à une source d'alimentation électrique depuis une tête de bras du système d'essuyage.

Cela étant, la connexion électrique au dispositif de chauffage est établie directement sur le balai et ceci selon une direction perpendiculaire à celui-ci. Une telle connexion nécessite un assemblage précis des contacts de connexion sur le balai, ce qui implique un dimensionnement précis des pièces coopérant à cet assemblage. Une telle configuration est donc difficile à maîtriser dans le cas d'une fabrication à grandes cadences. Le document WO 2012/072299 A1 montre un dispositif selon le préambule de la première revendication.

L'invention vise à pallier cet inconvénient.

Il est proposé à cet effet un dispositif de connexion électrique pour un dispositif de chauffage d'un balai d'essuyage d'un système d'essuyage de véhicule automobile, ledit dispositif de connexion étant destiné, lors de l'assemblage du balai à une tête de bras du système d'essuyage, à relier une source d'alimentation électrique depuis la tête de bras du système d'essuyage audit dispositif de chauffage, ledit dispositif de connexion comprenant un corps configuré pour être rapporté à un connecteur mécanique du balai et un élément de raccordement électrique permettant d'établir une connexion électrique entre ledit dispositif de connexion et ledit dispositif de chauffage à travers ledit corps, ledit corps étant apte à venir en accostage au connecteur mécanique selon une direction sensiblement parallèle au balai, au montage du dispositif de connexion électrique audit balai, caractérisé en ce que le dispositif de connexion électrique comporte une ou des fiches de raccordliées audit corps et aptes à être appliquées en contact avec ledit dispositif de chauffage, la ou lesdites fiches de raccord comprenant des lames de contacts flexibles, comportant une partie formant patin de contact avec ledit dispositif de chauffage.

Ainsi, le montage du dispositif de connexion au balai est facilité, en étant réduit à une simple insertion du dispositif de connexion au connecteur mécanique du balai par l'action de guidage du corps du dispositif de connexion sur ledit connecteur mécanique. De plus, le contact ne se fait plus selon une direction de montage perpendiculaire au balai, c'est-à-dire selon une position géométrique précise qui impliquait une précision des pièces de contact ainsi que la maitrise de la pression du contact, comme dans la technique connue. La configuration selon l'invention permet donc une tolérance relativement large de position sur le balai.

Il pourra en particulier s'agir d'un dispositif de chauffage d'un liquide lave glace parcourant le balai.

Ladite direction d'accostage est de préférence sensiblement longitudinale relativement à la direction d'extension en longueur du balai.

Selon d'autres caractéristiques de l'invention qui pourront être prises seules ou en combinaison :
- ledit corps est configuré pour être inséré dans ledit connecteur mécanique,
- lesdites fiches de raccord sont au nombre de deux,
- lesdites fiches de raccord sont aptes à être verrouillées, par exemple soudées ou serties, au dispositif de chauffage,
- le corps et la ou les fiches de raccord sont positionnés l'un par rapport à l'autre ou aux autres pour permettre un résinage d'isolation électrique des fiches à travers un orifice du corps,
- la ou lesdites fiches de raccord comprennent des lames de contact, flexibles ou non,
- la ou lesdites lames de contact sont distantes l'une de l'autre,
- ledit corps est apte à être monté audit connecteur mécanique du balai d'essuyage simultanément à l'établissement de ladite liaison électrique entre l'élément de raccordement et ledit dispositif de chauffage,
- les lames de contact sont configurées pour venir en contact avec le dispositif de chauffage, au montage du dispositif,
- le corps est configuré pour venir en accostage dans ledit connecteur mécanique simultanément audit dispositif de chauffage auquel il aura été préalablement connecté.

L'invention concerne également un balai d'essuyage d'un système d'essuyage comportant un tel dispositif de connexion électrique.

Ledit balai comporte un connecteur mécanique, ledit connecteur mécanique étant solidaire du balai et prévu pour être articulé à une tête de bras du système d'essuyage.

Ledit connecteur mécanique et ledit corps du dispositif de connexion comportent avantageusement des moyens de guidage mutuel pour ladite insertion du corps du dispositif de connexion dans le connecteur mécanique, lors de son montage.

Lesdits moyens de guidage sont de préférence du type à glissières.

Ledit dispositif de chauffage, monté sur le balai, comporte avantageusement une bande électrique de contact configurée pour coopérer avec ledit dispositif de connexion.

Ladite bande électrique de contact s'étend avantageusement à l'intérieur du connecteur mécanique pour l'établissement de ladite connexion électrique.

Lesdits moyens de guidage sont avantageusement configurés pour permettre un verrouillage de ladite connexion, de préférence au moyen d'un clipage ou d'une soudure de la connexion.

Ledit connecteur mécanique est avantageusement configuré pour recevoir ledit élément de raccordement, notamment lesdites fiches de contact, dans un logement formé en son sein, , en particulier en vis-à-vis du dispositif de chauffage.

Ledit logement est apte à être fermé et rempli de résine notamment par ledit orifice du corps, ce qui permet d'isoler électriquement l'une de l'autre lesdites fiches de contact.

Ledit logement est apte à être fermé au moyen d'un bouchon en vue de sa fermeture pour ledit résinage.

Selon un premier mode de réalisation de l'invention, lesdits moyens de guidage sont avantageusement configurés pour permettre, lors du montage, une translation desdites lames de contact sensiblement parallèle à ladite bande électrique de contact, de préférence inclinée par rapport à la bande de contact, selon un angle d'inclinaison faible, par exemple compris entre environ 3 et 15°, ce qui assure un contact par coincement de la connexion à l'assemblage.

Ladite bande électrique de contact est solidaire du balai. Elle est orientée, notamment, suivant ladite extension en longueur de ce dernier.

Selon un second mode de réalisation de l'invention, ladite bande électrique de contact est configurée pour être disposée solidaire du dispositif de connexion et venir en application sur le balai, au montage, notamment suivant ladite extension en longueur de ce dernier.

Ladite bande électrique et ledit dispositif de connexion sont alors aptes à être connectés l'un à l'autre préalablement à leur montage dans le connecteur mécanique.

Ladite bande électrique et ledit dispositif de connexion, connectés l'un à l'autre, sont aptes à être translatés sur le balai dans ledit connecteur mécanique.

Ledit dispositif de chauffage est solidaire d'une vertèbre de cintrage du balai.

L'invention concerne également un système d'essuyage comprenant un tel balai d'essuyage.

L'invention concerne encore un procédé de montage d'un tel système d'essuyage, comprenant les étapes suivantes:
- guider ledit dispositif de connexion et/ou ledit dispositif de connexion et le dispositif de chauffage, préalablement connectés, sur ledit connecteur mécanique, selon une direction sensiblement parallèle au balai,
- verrouiller ladite connexion.

D'autres caractéristiques et avantages de l'invention apparaîtront à la lecture de la description qui suit d'exemples de réalisation donnés à titre illustratif en référence aux figures annexées. Sur ces figures :
- la figure 1 est une vue en perspective partielle d'un système d'essuyage comprenant un dispositif de connexion selon un mode de réalisation de l'invention, le dispositif de connexion étant en cours de montage,
- la figure 2 est une vue analogue à la figure 1 du système d'essuyage selon la figure 1, le connecteur mécanique étant ôté pour la clarté du dessin,
- la figure 3 est une vue analogue à la figure 1 du système d'essuyage selon la figure 1, le dispositif de connexion étant monté, un bouchon de résinage étant en cours de montage.
- la figure 4 est une vue analogue à la figure 1 du système d'essuyage selon la figure 1, le dispositif de connexion étant monté et le bouchon de résinage étant également monté,
- la figure 5 est une vue analogue à la figure 2 du système d'essuyage selon la figure 1, le dispositif de connexion étant monté et le connecteur mécanique étant ôté pour la clarté du dessin, et
- les figures 6 à 8 et 9, 10 montrent selon des vues en perspective, respectivement, la connexion du dispositif de connexion au dispositif de chauffage et le montage du dispositif de connexion, pré assemblé au dispositif de chauffage, sur le connecteur mécanique, selon une variante de réalisation d'un système d'essuyage selon l'invention.

Des références numériques identiques sont utilisées pour désigner des éléments identiques ou analogues.

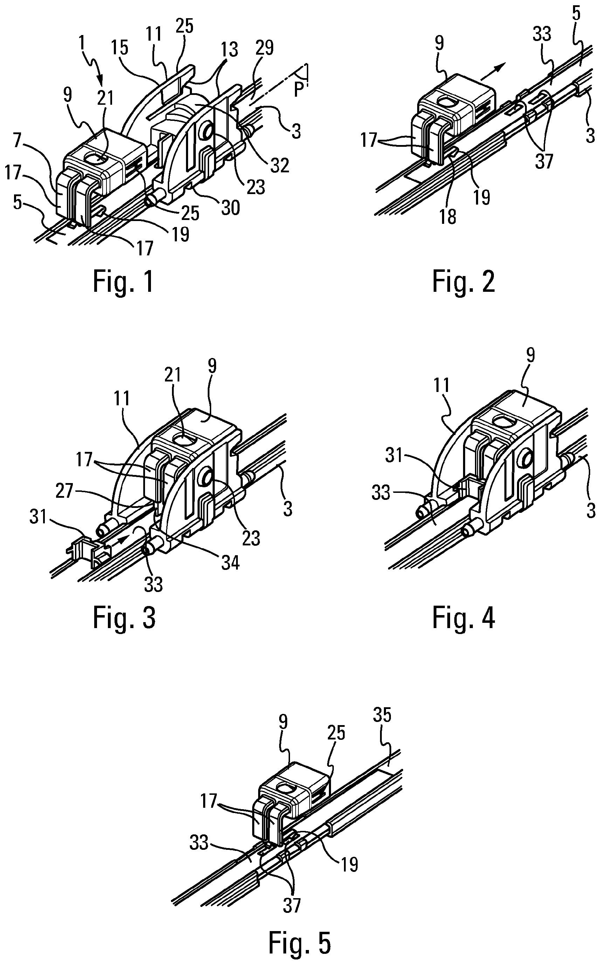

Avec référence au dessin, en particulier les figures 1 à 5, l'invention concerne un connecteur ou dispositif de connexion électrique 1 pour un dispositif de chauffage 5 de liquide lave glace pour un balai d'essuyage 3 d'un système d'essuyage de véhicule automobile.

Ledit dispositif de connexion 1 est destiné, lors de l'assemblage du balai 3 à une tête de bras du système d'essuyage, non représentée, à relier une source d'alimentation électrique audit dispositif de chauffage 5.

Ledit dispositif de connexion 1 est destiné également à permettre la déconnexion de l'alimentation du dispositif de chauffage lors d'une dépose d'un balai d'essuyage, par exemple d'un balai usager, pour un balai d'essuyage de remplacement. Le dispositif de connexion reste fixé au connecteur mécanique du balai, une contre partie électrique de ce dispositif de connexion restant sur la bras comme décrit ci-dessous.

Ledit dispositif de connexion est destiné à être connecté, par exemple, à une interface électrique, non représentée, éventuellement associée à une interface hydraulique d'alimentation en liquide lave-glace. Lesdites interfaces sont configurées pour être liées au bras lors d'un changement de balai et pour laisser ledit balai libre en rotation par rapport au bras, autour d'un axe orthogonal audit balai, en utilisation. Ladite interface électrique est à son tour reliée à une alimentation électrique du véhicule, par exemple par un conducteur électrique courant le long du bras.

Selon l'invention, ledit dispositif de connexion 1 comprend un corps 9 configuré pour être rapporté à un connecteur mécanique 11 du balai et un élément de raccordement électrique 7 permettant d'établir une connexion électrique entre ledit dispositif de connexion 1 et ledit dispositif de chauffage 5 à travers ledit corps 9. Ledit corps 9 est apte à venir en accostage au connecteur mécanique 11 selon une direction sensiblement parallèle au balai, au montage du dispositif de connexion électrique 1 audit balai, voir les figures 2 et 5 en particulier.

Ainsi, le montage du dispositif de connexion 1 au balai 3 est facilité puisque résultant de la simple manipulation du corps. De plus, dans le mode de réalisation illustré, le contact ne se fait plus selon une direction de montage perpendiculaire au balai 3, c'est-à-dire selon une position géométrique précise qui implique une précision des pièces de contact et la maitrise de la pression du contact. On pourra de la sorte assurer plus facilement un contact satisfaisant entre ledit dispositif de connexion 1 et le dispositif de chauffage 5 du balai, comparé à un accostage ponctuel sur le dispositif de chauffage, selon une direction perpendiculaire au dispositif chauffant, comme dans l'art antérieur précité. De ce fait, le dispositif selon l'invention sera soumis à des tolérances plus larges de ses composants d'assemblage que celles du dispositif de l'art antérieur.

Ladite direction d'accostage est de préférence longitudinale relativement à la direction d'extension en longueur du balai 3.

Le corps 9 est avantageusement apte à être monté sur, en particulier inséré dans, le connecteur mécanique 11 du balai d'essuyage.

Ledit connecteur mécanique 11 comporte ici, par exemple, une base 30 servant, notamment, à fixer, en particulier sertir, ledit connecteur 11 sur le balai 3 en particulier une armature porteuse du balai. Il comprend encore des flancs latéraux 13, par exemple issu de la base 30. Ledit connecteur mécanique 11 pourra aussi comprendre, notamment entre lesdits flancs 13, des éléments 32 permettant le raccordement de l'interface hydraulique évoqué plus haut sur ledit connecteur mécanique 5. Ici, les flancs 13 comportent des éléments d'axe latéraux 23 servant à l'articulation du balai 3 sur le bras, notamment par l'intermédiaire d'un adaptateur en forme de chape, non-représenté, coiffant le connecteur 11 et destiné à être fixé à la tête de bras, de façon amovible pour permettre le montage/démontage du balai. La tête de bras pourra également être en forme de chape pour accueillir intérieurement ledit adaptateur.

Ici, ledit corps 9 est reçu entre les flancs 13 du connecteur mécanique. Il y est, par exemple, inséré par un dispositif de guidage 15 lors du montage, comme cela sera détaillé plus bas.

Ledit dispositif de connexion 1 comporte, par exemple, une ou des fiches de raccord 17 liées audit corps 9 et aptes à être appliquées en contact avec ledit dispositif de chauffage 5, lors du montage du corps 9 entre lesdits flancs latéraux 13. Lesdites fiches de raccord 17 sont au nombre de deux, et comprennent avantageusement des lames de contact 18, flexibles ou non.

Dans ce mode de réalisation, les lames de contact 18 sont configurées pour venir en contact avec le dispositif chauffant 5, au montage du dispositif.

Elles comportent, par exemple, une partie formant patin de contact 19 avec ledit dispositif de chauffage 5. Ces lames 18 sont notamment destinées à glisser par leur partie patin 19 sur le dispositif de chauffage 5, à l'assemblage.

Lesdites fiches de contact sont, par exemple, issues du corps 9 et sont en forme de crochet pour finir parallèlement audit balai 3 par leur lame de contact 18.

La ou lesdites lames de contact 18 sont distantes l'une de l'autre, en étant par exemple positionnées en décalage longitudinal sur le dispositif de chauffage 5, comme ici. Ainsi, on limite les risques de contact entre les lames 18.

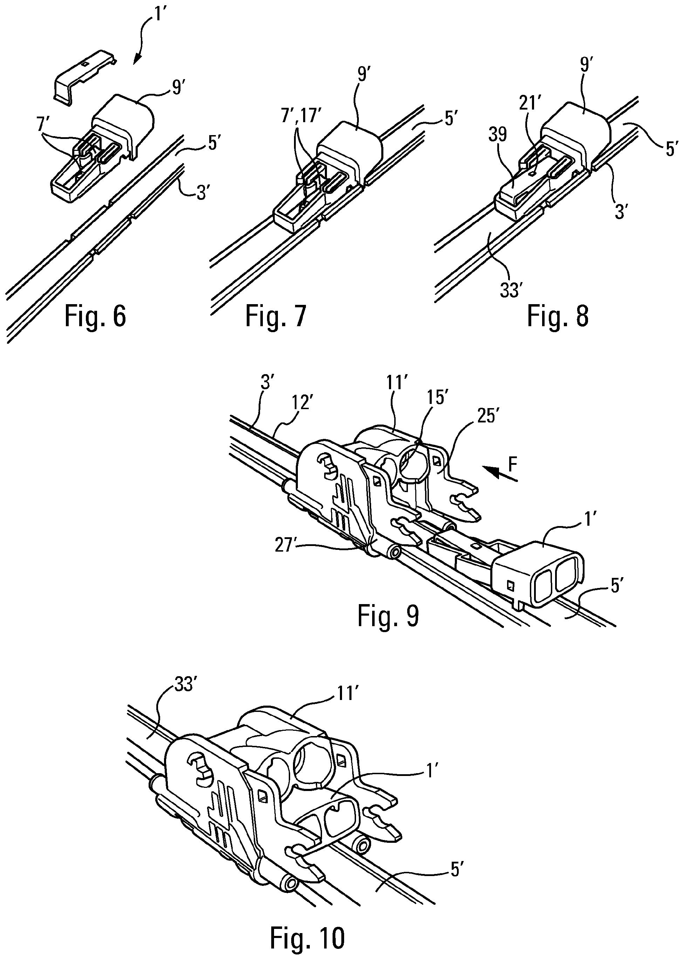

Selon la variante de réalisation représentée aux figures 6 à 10, où les éléments analogues sont représentés par une référence numérique équivalente complétée d'un prime, lesdites fiches de raccord 17' sont aptes à être verrouillées, par exemple soudées ou serties, au dispositif de chauffage 5' et c'est alors l'ensemble du dispositif de connexion 1' et du dispositif de chauffage 5' qui est inséré dans le connecteur mécanique 11'. Plus précisément, ici, le dispositif de chauffage 5' est monté sur une vertèbre 12" du balai (figures 6 à 8) et l'ensemble est translaté dans l'armature porteuse 3' du balai à laquelle ledit connecteur mécanique 11' a déjà été assemblé (figures 9 et 10).

Dans ces deux modes de réalisation, le corps 9, 9' et la ou les fiches de raccord 17, 17' sont positionnés l'un par rapport à l'autre ou aux autres pour permettre un résinage d'isolation électrique des fiches à travers un orifice 21, 21' du corps. Ce résinage fait en effet intervenir une résine isolante électrique coulée à l'état liquide ou pâteux par ledit orifice sur les fiches et qui se solidifie sur celles-ci pour les isoler électriquement de l'environnement, notamment des poussières et de l'humidité et pour les isoler entre elles. Cette résine reste souple afin d'absorber les micros mouvements possibles entre le dispositif chauffant et les fiches.

Le balai d'essuyage 3, 3' du système d'essuyage comportant le dispositif de connexion électrique 1, 1' décrit ci-dessus fait également l'objet de l'invention. Comme déjà dit, il comprend ledit connecteur mécanique 11, 11'.

Ledit connecteur mécanique 11, 11' et ledit corps 9, 9' du dispositif de connexion comportent avantageusement des moyens de guidage mutuel, tel que le moyen de guidage 15 précité ou 15' selon la variante, pour ladite insertion du corps du dispositif de connexion dans le connecteur mécanique, lors du montage. Ces moyens de guidage 15, 15' peuvent avantageusement être du type à glissières 25, 25'. Ces glissières sont formées sur le connecteur mécanique, en particulier sur ses flancs, et sur le dit corps du dispositif de connexion électrique. Un moyen de verrouillage du guidage du corps 9, 9' dans le connecteur 11, 11' est prévu. Le verrouillage est réalisé par exemple par un clipage franc non démontable, de type harpon ou une soudure à ultra, sons ou un collage.

Ledit connecteur mécanique 11, 11' est avantageusement configuré pour recevoir lesdites fiches de contact 17, 17' dans un logement 27, 27' formé en son sein, en regard dudit dispositif de chauffage 5, 5'.

Selon le premier mode de réalisation, ledit logement 27 est apte à être rempli de résine par ledit orifice 21 du corps, ce qui permet d'isoler électriquement l'une de l'autre lesdites fiches de contact 17 ainsi que précité. Ce logement 27 est ici délimité par lesdits flans 13 du connecteur mécanique, ledit corps 9, ledit dispositif de chauffage 5 et la face supérieure 29 de l'armature porteuse du balai. Ladite résine est introduite par ledit orifice 21, lequel est un orifice supérieur dudit corps, disposé au droit desdites lames de contact 18. Alternativement, il peut ne pas y avoir d'orifice pour l'introduction de la résine.

Ledit logement 27 est apte à être fermé longitudinalement, d'une part, au moyen d'un bouchon 31, notamment un bouchon inférieur, en vue de sa fermeture pour ledit résinage. Ce bouchon 31 est avantageusement prévu pour être inséré entre le balai 3, lesdits flans 13 et ledit corps 9, à la partie avant dudit logement 27. Ledit logement 27 pourra être fermé longitudinalement, d'autre part, par ledit élément 32 de raccord hydraulique. Ledit connecteur mécanique 11 pourra également comprendre une cloison 34 de séparation des fiches de raccord 17, ladite cloison 34 étant ici issue dudit élément 32 de raccord hydraulique.

Selon la variante de réalisation, le logement 27' est formé à la partie inférieure du connecteur 11 et reçoit le corps 9' du dispositif. Le corps 9' est ouvert par sa face inférieure en vis-à-vis du dispositif de chauffage 5' pour permettre la connexion de ce dernier à l'élément de raccordement électrique. Le corps est fermé par le dispositif de chauffage au niveau inférieur et par un capot supérieur 39 qui le recouvre. Le capot 39 est pourvu dudit orifice 21' pour l'introduction de la résine en vue dudit résinage. Alternativement, il peut ne pas y avoir de capot de fermeture du logement,

Dans les deux modes, ledit dispositif de chauffage 5, 5' monté sur le balai comporte avantageusement une bande électrique de contact 33, 33' configurée pour coopérer avec ledit dispositif de connexion 1, 1'.

Ladite bande électrique de contact 33 est dans le premier mode de réalisation disposée solidaire du balai 3, en étant fixée notamment à la face supérieure 35 d'une vertèbre dudit balai, préalablement montée dans l'armature porteuse de ce dernier. Cette bande de contact 33 est configurée pour recevoir en contact électrique lesdites lames de contact 18. Elle s'étend pour cela à l'intérieur du connecteur mécanique 11. Elle comporte en particulier des points 37 de contact électriques en forme de rectangle recevant les patins 19 des lames de contact à la connexion, comme représenté à la figure 5.

Lesdits moyens de guidage 15 sont avantageusement configurés pour permettre, lors du montage, une translation desdites fiches de contact 17 sensiblement parallèle à ladite bande électrique de contact 33. Cette translation est de préférence inclinée par rapport à ladite bande électrique 33, selon un angle d'inclinaison faible, non représenté, cet angle étant compris, par exemple, entre environ 3 et 15°. Cette inclinaison assure un contact par accostage en coincement des lames de contact 18 sur la bande de contact 33.

Selon la variante de l'invention, ladite bande électrique 33' et ledit dispositif de connexion 1' sont aptes à être connectés l'un à l'autre préalablement à leur montage dans le connecteur mécanique 11'.

Ladite bande électrique de contact 33' est en particulier prévue pour être disposée solidaire du dispositif de connexion 1', grâce à la dite connexion des fiches de contact 17' et de la bande 33', comme représenté aux figures 6 à 8. L'ensemble vient en application sur le balai 3', au montage, notamment suivant ladite extension en longueur de ce dernier. Le dispositif et la bande sont notamment translatés par la vertèbre 12 dans le connecteur mécanique 11' et l'armature porteuse du balai selon la flèche F, à l'assemblage, le dispositif venant dans le logement 27' et s'y verrouillant en fin de montage. Dans ce mode, la connexion électrique établie entre l'élément de raccordement 7' et le dispositif de chauffage 5' peut avoir été réalisé selon toute direction de montage voulue, par exemple parallèle ou perpendiculaire, le dispositif de chauffage n'étant en effet pas encore monté sur le balai et les contraintes de montage étant donc plus faibles.

Dans les deux cas, lesdits moyens de guidage 15, 15' sont avantageusement configurés pour permettre un verrouillage de ladite connexion, au terme de la dite translation d'assemblage, de préférence à l'aide d'un moyen d'arrêt de type clip ou une soudure de la connexion.

L'armature porteuse du balai pourra servir de support à une lame racleuse (non-représentée), rapportée sur l'une de ses faces, et/ou à des déflecteurs (non-représentés), rapportés sur sa face opposée, prévue munie dudit connecteur mécanique 11, 11'.

L'invention concerne également le procédé de montage du système d'essuyage comprenant le balai, tel que décrit ci dessus.

Le procédé comprend les étapes suivantes:
- guider ledit dispositif de connexion 1, 1', éventuellement pré assemblé au dispositif de chauffage 5', sur ledit connecteur mécanique 11, 11', notamment à l'aide desdits moyens de guidage 15, 15', notamment insérer ledit corps 9, 9' dans le connecteur mécanique 11, 11' et
- verrouiller ladite connexion.

Le résinage d'isolation électrique des fiches de raccord 17, 17' dans le logement 27, 27' formé en regard dudit dispositif de chauffage 5, 5', pourra être réalisé, notamment à travers l'orifice 21, 21' d'injection de résine, préalablement à l'assemblage au balai ou après cet assemblage.

L'invention apporte ainsi une solution simple et fiable pour assurer une connexion électrique entre un circuit d'alimentation électrique et un dispositif de chauffage du liquide lave glace d'un balai d'essuyage d'un système d'essuyage de véhicule automobile.

## Revendications

1. Dispositif (1, 1') de connexion électrique pour un dispositif de chauffage (5, 5') d'un balai (3, 3') d'essuyage, ledit dispositif de connexion comprenant un corps (9, 9') configuré pour être rapporté à un connecteur mécanique (11, 11') du balai et un élément de raccordement électrique (7, 7') permettant d'établir une connexion électrique entre ledit dispositif de connexion et ledit dispositif de chauffage (5, 5') à travers ledit corps (9,9'), ledit corps (9,9') étant apte à venir en accostage au connecteur mécanique (11, 11') selon une direction sensiblement parallèle au balai, au montage du dispositif de connexion électrique sur le balai, **caractérisé en ce que** le dispositif de connexion électrique (1, 1') comporte une ou des fiches de raccord (17, 17') liées audit corps (9, 9') et aptes à être appliquées en contact avec ledit dispositif de chauffage (5, 5'), la ou lesdites fiches de raccord (17) comprenant des lames (18) de contact, flexibles, comportant une partie formant patin (19) de contact avec ledit dispositif de chauffage (5).

2. Dispositif de connexion électrique (1, 1') selon la revendication 1, dans lequel ledit corps (9, 9') est configuré pour être inséré dans ledit connecteur mécanique (11, 11').

3. Dispositif de connexion électrique (1, 1') selon l'une des revendications précédentes, dans lequel le corps (9, 9') et la ou les fiches de raccord (17, 17') sont positionnés l'un par rapport à l'autre ou aux autres pour permettre un résinage d'isolation électrique des fiches (17, 17') à travers un orifice (21, 21') du corps.

4. Dispositif de connexion électrique (1) selon l'une quelconque des revendications à 3, dans lequel le corps (9) est apte à être monté sur le connecteur mécanique (11) simultanément à l'établissement de ladite liaison électrique entre l'élément de raccordement électrique (7) et ledit dispositif de chauffage (5).

5. Dispositif de connexion (1') selon l'une quelconque des revendications 1 à 3 dans lequel ledit corps (9') est configuré pour venir en accostage dans ledit connecteur mécanique (11') simultanément audit dispositif de chauffage (5') auquel il aura été préalablement connecté.

6. Balai d'essuyage (3, 3') d'un système d'essuyage comportant un dispositif de connexion électrique (1, 1') selon l'une quelconque des revendications précédentes.

7. Balai d'essuyage (3, 3') selon la revendication 6, comportant un connecteur mécanique (11, 11'), ledit connecteur mécanique (11, 11') étant solidaire du balai (3, 3') et prévu pour être articulé à une tête de bras d'un système d'essuyage.

8. Balai d'essuyage (3, 3') selon la revendication 6 ou 7, dans lequel ledit connecteur mécanique (11, 11') et ledit corps (9, 9') du dispositif de connexion comportent des moyens de guidage mutuel (15, 15') pour ladite insertion du corps (9, 9') du dispositif de connexion dans ledit connecteur mécanique (11, 11').

9. Balai d'essuyage (3, 3') selon l'une quelconque des revendications 6 à 8, dans lequel ledit connecteur mécanique (11, 11') est configuré pour recevoir ledit élément de raccordement électrique (7,7') dans un logement (27, 27') formé en son sein, en regard dudit dispositif de chauffage (5, 5').

10. Balai d'essuyage (3) selon la revendication 9, dans lequel ledit logement (27) est apte à être fermé et rempli de résine.

11. Balai d'essuyage (3, 3') selon l'une quelconque des revendications 6 à 10, dans lequel ledit dispositif de chauffage (5,5'), monté sur le balai (3, 3'), comporte une bande électrique de contact (33, 33') configurée pour coopérer avec ledit dispositif de connexion (1).

12. Système d'essuyage comprenant un balai d'essuyage (3, 3') selon l'une quelconque des revendications précédentes 6 à 11.

13. Procédé de montage d'un balai d'essuyage, selon l'une quelconque des revendications 6 à 11, comprenant les étapes suivantes :
- guider ledit dispositif de connexion (1, 1') et/ou ledit dispositif de connexion (1') et le dispositif de chauffage (5') préalablement connectés, sur ledit connecteur mécanique (1, 1'), selon une direction sensiblement parallèle au balai,
- verrouiller la connexion.

## Patentansprüche

1. Elektrische Anschlussvorrichtung (1, 1') für eine Heizvorrichtung (5, 5') eines Wischerblatts (3, 3'), wobei die Anschlussvorrichtung einen Körper (9, 9') umfasst, der dazu ausgestaltet ist, in einen mechanischen Verbinder (11, 11') des Wischerblatts eingesetzt zu werden, und ein elektrisches Verbindungselement (7, 7'), das es ermöglicht, einen elektrischen Anschluss zwischen der Anschlussvorrichtung und der Heizvorrichtung (5, 5') durch den Körper (9, 9') hindurch herzustellen, wobei der Körper (9, 9') geeignet ist, an den mechanischen Verbinder (11, 11') entlang einer Richtung, die im Wesentlichen parallel zum Wischerblatt verläuft, gekoppelt zu werden, bei der Montage der Anschlussvorrichtung an das Wischerblatt, **dadurch gekennzeichnet, dass** die elektrische Anschlussvorrichtung (1, 1') einen oder mehrere Verbindungsstecker (17, 17') umfasst, die mit dem Körper (9, 9') verbunden sind und geeignet sind, in Anlagekontakt mit der Heizvorrichtung (5, 5') gebracht zu werden, wobei der oder die Verbindungsstecker (17) flexible Kontaktmesser (18) umfassen, die ein Teil umfassen, das einen Kontaktschuh (19) mit der Heizvorrichtung (5) bildet.

2. Elektrische Anschlussvorrichtung (1, 1') nach Anspruch 1, bei welcher der Körper (9, 9') dazu ausgestaltet ist, in den mechanischen Verbinder (11, 11') eingesetzt zu werden.

3. Elektrische Anschlussvorrichtung (1, 1') nach einem der vorhergehenden Ansprüche, bei welcher der Körper (9, 9') und der oder die Verbindungsstecker (17, 17') zueinander so angeordnet sind, dass ein Überziehen mit Harz zur elektrischen Isolierung der Stecker (17, 17') durch eine Öffnung (21, 21') des Körpers hindurch ermöglicht wird.

4. Elektrische Anschlussvorrichtung (1) nach einem der Ansprüche bis 3, bei welcher der Körper (9) geeignet ist, am mechanischen Verbinder (11) gleichzeitig mit dem Herstellen der elektrischen Verbindung zwischen dem elektrischen Verbindungselement (7) und der Heizvorrichtung (5) montiert zu werden.

5. Anschlussvorrichtung (1') nach einem der Ansprüche 1 bis 3, bei welcher der Körper (9') dazu ausgestaltet ist, in dem mechanischen Verbinder (11') gleichzeitig mit der Heizvorrichtung (5') gekoppelt zu werden, an die er zuvor angeschlossen worden ist.

6. Wischerblatt (3, 3') eines Wischsystems mit einer elektrischen Anschlussvorrichtung (1, 1') nach einem der vorhergehenden Ansprüche.

7. Wischerblatt (3, 3') nach Anspruch 6 mit einem mechanischen Verbinder (11, 11'), wobei der mechanische Verbinder (11, 11') mit dem Wischerblatt (3, 3') fest verbunden ist und dazu vorgesehen ist, an einen Scheibenwischerkopf angelenkt zu werden.

8. Wischerblatt (3, 3') nach Anspruch 6 oder 7, bei dem der mechanische Verbinder (11, 11') und der Körper (9, 9') der Anschlussvorrichtung Mittel zur wechselseitigen Führung (15, 15') zum Einsetzen des Körpers (9, 9') der Anschlussvorrichtung in den mechanischen Verbinder (11, 11') umfassen.

9. Wischerblatt (3, 3') nach einem der Ansprüche 6 bis 8, bei dem der mechanische Verbinder (11, 11') dazu ausgestaltet ist, das elektrische Verbindungselement (7, 7') in einer in ihm gebildeten Aufnahme (27, 27') gegenüber der Heizvorrichtung (5, 5') aufzunehmen.

10. Wischerblatt (3) nach Anspruch 9, bei dem die Aufnahme (27) geeignet ist, verschlossen und mit Harz gefüllt zu werden.

11. Wischerblatt (3, 3') nach einem der Ansprüche 6 bis 10, bei dem die am Wischerblatt (3, 3') montierte Heizvorrichtung (5, 5') einen elektrischen Kontaktstreifen (33, 33') umfasst, der dazu ausgestaltet ist, mit der Anschlussvorrichtung (1) zusammenzuwirken.

12. Wischsystem mit einem Wischerblatt (3, 3') nach einem der Ansprüche 6 bis 11.

13. Verfahren zur Montage eines Wischerblatts nach einem der Ansprüche 6 bis 11, umfassend die folgenden Schritte:
- Führen der Anschlussvorrichtung (1, 1') und/oder der Anschlussvorrichtung (1') und der Heizvorrichtung (5'), die zuvor angeschlossen wurden, auf dem mechanischen Verbinder (1, 1') entlang einer Richtung, die im Wesentlichen parallel zum Wischerblatt verläuft,
- Verriegeln des Anschlusses.

## Claims

1. Electrical connection device (1, 1') for a heating device (5, 5') of a wiper blade member (3, 3'), the connection device comprising a body (9, 9') which is configured to be fitted to a mechanical connector (11, 11') of the blade member and an electrical connection element (7, 7') which allows an electrical connection to be established between the connection device and the heating device (5, 5') through the body (9, 9'), the body (9, 9') being capable of being positioned in the mechanical connector (11, 11') in a direction substantially parallel with the blade member, when the electrical connection device is mounted on the blade member, **characterized in that** the electrical connection device (1, 1') comprises one or more connection plug(s) (17, 17') which is/are connected to the body (9, 9') and which is/are capable of being pressed into contact with the heating device (5, 5'), wherein the connection plug(s) (17) comprise(s) flexible contact plates (18) which comprise a portion which forms a runner (19) for contact with the heating device (5).

2. Electrical connection device (1, 1') according to claim 1, wherein the body (9, 9') is configured to be inserted into the mechanical connector (11, 11').

3. Electrical connection device (1, 1') according to any one of the preceding claims, wherein the body (9, 9') and the connection plug(s) (17, 17') are positioned relative to each other or the others in order to allow resin to be tapped from the electrical insulation of the plugs (17, 17') via a hole (21, 21') of the body.

4. Electrical connection device (1) according to any one of claims 1 to 3, wherein the body (9) is capable of being mounted on the mechanical connector (11) at the same time as the electrical connection is established between the electrical connection element (7) and the heating device (5).

5. Connection device (1') according to any one of claims 1 to 3, wherein the body (9') is configured to be positioned in the mechanical connector (11') at the same time as the heating device (5') to which it has previously been connected.

6. Wiper blade member (3, 3') of a wiper system comprising an electrical connection device (1, 1') according to any one of the preceding claims.

7. Wiper blade member (3, 3') according to claim 6, comprising a mechanical connector (11, 11'),the mechanical connector (11, 11') being fixedly joined to the blade member (3, 3') and being provided to be articulated to an arm head of a wiper system.

8. Wiper blade member (3, 3') according to claim 6 or claim 7, wherein the mechanical connector (11, 11') and the body (9, 9') of the connection device comprise mutual guiding means (15, 15') for the insertion of the body (9, 9') of the connection device into the mechanical connector (11, 11').

9. Wiper blade member (3, 3') according to any one of claims 6 to 8, wherein the mechanical connector (11, 11') is configured to receive the electrical connection element (7, 7') in a housing (27, 27') which is formed at the interior thereof, facing the heating device (5, 5').

10. Wiper blade member (3) according to claim 9, wherein the housing (27) is capable of being closed and filled with resin.

11. Wiper blade member (3, 3') according to any one of claims 6 to 10, wherein the heating device (5,5') which is mounted on the blade member (3, 3') comprises an electrical contact strip (33, 33') which is configured to cooperate with the connection device (1).

12. Wiper system comprising a wiper blade member (3, 3') according to any one of the preceding claims 6 to 11.

13. Method for assembling a wiper blade member according to any one of claims 6 to 11, comprising the following steps:
- guiding the connection device (1, 1') and/or the connection device (1') and the heating device (5') which have previously been connected, to the mechanical connector (1, 1'), in a direction substantially parallel with the blade member,
- locking the connection.
